(19) Europäisches Patentamt / European Patent Office / Office européen des brevets

(11) **EP 4 600 400 A1**

(12) **EUROPEAN PATENT APPLICATION**
published in accordance with Art. 153(4) EPC

(43) Date of publication:
**13.08.2025 Bulletin 2025/33**

(21) Application number: **23875197.8**

(22) Date of filing: **04.10.2023**

(51) International Patent Classification (IPC):
*C23C 2/12* (2006.01)     *C23C 2/20* (2006.01)
*C23C 2/28* (2006.01)     *C22C 21/02* (2006.01)
*C22C 38/04* (2006.01)     *C22C 38/58* (2006.01)
*C22C 38/54* (2006.01)     *C22C 38/42* (2006.01)
*C22C 38/44* (2006.01)     *C22C 38/46* (2006.01)

(52) Cooperative Patent Classification (CPC):
**C22C 21/02; C22C 38/04; C22C 38/42;
C22C 38/44; C22C 38/46; C22C 38/54;
C22C 38/58; C23C 2/12; C23C 2/20; C23C 2/28**

(86) International application number:
**PCT/KR2023/015225**

(87) International publication number:
**WO 2024/076133 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.10.2022 KR 20220128022**

(71) Applicant: POSCO Co., Ltd
**Pohang-si, Gyeongsangbuk-do 37859 (KR)**

(72) Inventors:
• **OH, Kkoch-Nim**
  **Gwangyang-si, Jeollanam-do 57807 (KR)**
• **HWANG, Hyeon-Seok**
  **Gwangyang-si, Jeollanam-do 57807 (KR)**
• **OH, Ji-Eun**
  **Gwangyang-si, Jeollanam-do 57807 (KR)**
• **CHO, Yong-Kyun**
  **Seoul 06194 (KR)**

(74) Representative: **Meissner Bolte Partnerschaft
mbB
Patentanwälte Rechtsanwälte
Postfach 86 06 24
81633 München (DE)**

(54) **ALUMINUM-PLATED STEEL SHEET, HOT PRESS-FORMED MEMBER USING SAME, AND MANUFACTURING METHOD THEREFOR**

(57)    The present invention relates to an aluminum-plated steel sheet for use in automobiles and the like, a hot press-formed member manufactured using same, and methods for manufacturing same.

FIG. 1

EP 4 600 400 A1

## Description

### Technical Field

The present disclosure relates to an aluminum-plated steel sheet for use in automobiles and the like, a hot press-formed member manufactured using same, and methods for manufacturing same.

### Background Art

Recently, efforts have been made to improve fuel efficiency through weight reduction of automobiles. To this end, the thickness of steel may be reduced, but if the thickness is reduced, problems may arise with the stability of the automobile, so that the strength of the steel should be improved. For this reason, demand for high-strength steel has continuously occurred, and various types of steel have been developed. However, since these steels have high strength, there may be a problem of poor workability, such as a springback phenomenon.

In order to solve this problem, a hot press forming process has been proposed. The hot press forming process is also named hot press forming, hot working, or the like. The hot press forming process is a method of processing steel at a high temperature (over 800°C) that is good for processing the steel, and then performing press forming in a mold and simultaneously performing rapid cooling at a low temperature to form low-temperature structures such as martensite in the steel and to increase the strength of a final product. In this case, the problem of processability may be minimized when manufacturing a high-strength member.

Using such hot press forming, not only can complex shapes be easily formed, but a manufactured component (hot press-formed member) has the advantage of securing high strength, so that usability thereof has been increasing recently. Specifically, by utilizing plated steel, plated using aluminum, zinc, or the like, on a surface of the steel, high corrosion resistance may also be secured. For example, patent document 1 discloses the use of a steel sheet plated with aluminum in a hot press forming process.

When heating a steel sheet, plated with aluminum, zinc, or the like, for hot press forming, Fe of a base iron may diffuse into a plating layer, causing an alloying reaction with the plating layer of aluminum, zinc, or the like. In this case, the plating layer may become brittle, and alloy layer powder particles may be generated on a surface. These alloy layer powder particles accumulate continuously in a mold during press processing in the mold, which may eventually cause die pollution of a mold.

When the alloy layer powder particles accumulate in the mold and cause the die pollution of the mold, a mark is created on the hot press-formed member formed in the mold. The mark created by the die pollution of the mold causes a problem in that since a thickness of the steel is relatively thin as compared to a surrounding area, when applying to a body requiring high strength, stress is concentrated on the body and the body may be easily destroyed. This problem is directly related to safety when applied to automobiles, and thus, it is necessary to resolve the problem.

Since the mold die pollution phenomenon is unavoidable for automobile component manufacturers, automobile component manufacturers check the condition of the mold and remove the alloy layer powder particles accumulated in the mold by blowing the alloy layer powder particles with an air blower before the die pollution of the mold occurs, or stop a hot-press forming line and remove the die pollution with a grinder, or the like, when the die pollution of the mold occurs.

As described above, problems and inconveniences caused by die pollution of the mold have the potential to reduce product quality and productivity, and there is constant demand to improve the problems.

(Patent Document 1) U.S. Patent No. 6,296,805

### Summary of Invention

### Technical Problem

An aspect of the present disclosure is to provide an aluminum-plated steel sheet that may be used for hot press forming, and more particularly, to provide an aluminum-plated steel sheet having excellent mold die pollution-resistance properties, a hot press-formed member using the same, and a manufacturing method thereof.

The aspects of the present disclosure are not limited to the above-described contents. A person skilled in the technical field to which the present disclosure pertains would have no difficulty in understanding additional aspects of the present disclosure from the general contents of the specification of the present disclosure.

### Solution to Problem

An aspect of the present disclosure relates to an aluminum-plated steel sheet including: a base steel sheet and an Al plating layer formed on the base steel sheet,

wherein in GDOES analysis results from a surface of the Al plating layer in a thickness direction, a Fe concentration gradient in a section during which a Fe content in the Al plating layer is 40 to 90 wt.% is 13 to 26 wt.%/$\mu$m, wherein the Fe content of the Al plating layer is 8 to 24 wt.%

The Al plating layer may include an alloy layer formed on an interface with the base steel sheet, and a thickness of the alloy layer may be 2 to 6 $\mu$m.

The Fe concentration gradient may be 13.5 to 23 wt.%.

The Fe content of the Al plating layer may be 8.5 to 23 wt.%.

In order to secure sufficient corrosion resistance and mold die pollution-resistance properties, a thickness of the Al plating layer may be 3 to 30 $\mu$m.

The base steel sheet may include, by wt.%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, REM: 0 to 0.3%, and a balance of Fe and other impurities.

Another aspect of the present disclosure relates to a manufacturing method of an aluminum-plated steel sheet including: immersing a base steel sheet in an aluminum (Al) plating bath including silicon (Si) and attaching a plating solution to a surface of the base steel sheet;

controlling a plating attachment amount on the surface of the base steel sheet using an air knife (A/K); and transferring the base steel sheet to which the plating solution is attached, to a cooling means, and cooling the base steel sheet, wherein a condition that a K value of the following (Formula 2) is 200 to 400 is satisfied,

$$\text{(Formula 2)} \quad K = 10^6 * (a*d) / (b*c*e)$$

where a: plating bath Si content (wt.%), b: line speed (mpm), c: A/K gap (mm), d: A/K pressure (kPa), A/K height (mm).

In order to secure plating quality and suppress occurrence of dross, a plating bath inlet temperature of the base steel sheet may be 600 to 680°C.

The plating attachment amount may be 8 to 80 g/m$^2$.

The plating bath includes silicon (Si): 6-12 wt.%, iron (Fe): 1-4 wt.%, and a balance of aluminum (Al) and other inevitable impurity elements.

The plating bath may include 5 to 13 wt.% of silicon (Si), 15 to 35 wt.% of zinc (Zn), 0.01 to 5 wt.% of magnesium (Mg), 0 to 5 wt.% of iron (Fe), 0.01 to 5 wt.% of manganese (Mn), 0.01 to 7 wt.% of chromium (Cr), and a balance of aluminum (Al) and other inevitable impurity elements.

In order to secure fluidity of a plating bath and suppress occurrence of dross, a temperature of the plating bath may be 600 to 680°C.

Yet another aspect of the present disclosure relates to a hot press-formed member including: a base iron, an Fe-Al alloy plating layer formed on the base iron, and a diffusion layer formed between the base iron and the Fe-Al alloy plating layer,

wherein a hard layer ratio defined by the following (Formula 3) is 50 to 75%,

$$\text{(Formula 3)} \quad \text{Hard layer ratio} =$$

$$\frac{\textit{Fe-Al} \text{ plating layer average thickness}}{(\textit{Fe-Al} \text{ plating layer average thickness} + \text{Diffusion layer average thickness})} \times 100$$

Yet another aspect of the present disclosure relates to a manufacturing method of a hot press-formed member including: manufacturing a blank using the aluminum-plated steel sheet;

heating the blank; and
forming and cooling the heated blank in a mold.

**Advantageous Effects of Invention**

In the case of hot press-forming an aluminum-plated steel sheet as an example of the present disposed, die pollution of a mold due to plating layer powder particles according to alloying of the plating layer may be reduced.

Accordingly, it may be possible to prevent a decrease in the quality of a hot press-formed member and to secure product stability. Additionally, since the work of removing the plating layer powder particles may be omitted, productivity and costs of the product may be reduced.

Advantages and effects of the present disclosure are not limited to the foregoing content and may be more easily understood in the process of describing a specific embodiment of the present disclosure.

## Brief Description of Drawings

FIG. 1 illustrates a Fe Depth profile result of GDOES according to Inventive Example 2 of an embodiment.
FIG. 2 is an image of a specimen observed after a V-banding experiment in an embodiment.
FIG. 3 is a result of measuring the amount of powder particles generated after the V-banding experiment in an embodiment.
FIG. 4 is a result of measuring a hard layer ratio in an embodiment.

## Best Mode for Invention

Hereinafter, the present disclosure is described in detail.

The terms used in the present specification are intended to describe specific embodiments and are not intended to limit the present disclosure. In addition, singular forms used in the present specification include plural forms unless the relevant definition indicates the opposite meaning.

The meaning of "include" and "comprise" used in the specification specifies the configuration and does not exclude the existence or addition of other configurations.

Unless otherwise defined, all terms including technical and scientific terms used herein have the same meaning as commonly understood by one of ordinary skill in the art to which example embodiments of the present disclosure belong. It will be further understood that the terms, such as those defined in commonly used dictionaries, should be interpreted as having meanings consistent with the relevant technical literature and the currently disclosed content.

In the present disclosure, the term "member" refers to a component or a component material manufactured by hot press forming. In addition, a steel sheet refers to a material before hot press forming, and also includes forms such as a coil.

When hot press forming is performed using plated steel, plating layer powder particles due to alloying of the plating layer is a main cause of die pollution of a mold, and thus, it has been recognized that the development of a material that minimizes the plating layer powder particles during hot press forming is decisive.

When aluminum-plated steel is heated, Fe of a base iron diffuses into an Al plating layer to form an Fe-Al alloy plating layer, and a diffusion layer is formed between the base iron and the Fe-Al alloy plating layer. The diffusion layer and the Fe-Al alloy plating layer form an Fe-Al alloy by starting from $\alpha$-Fe, which has a high Fe content, from a base iron portion according to the Fe content, and diffusing Fe in the form of $Fe_3Al \rightarrow FeAl \rightarrow Fe_2Al_5 \rightarrow FeAl_3$. A portion in which $\alpha$-Fe and $Fe_3Al$ FeAl, having a high Fe content, are formed in large quantities, is referred to as a diffusion layer, and a portion in which $Fe_2Al_5$ and $FeAl_3$, having a relatively high Al content, are formed in large quantities, is referred to as an Fe-Al alloy plating layer. In the Fe-Al alloy, $Fe_2Al_5$ and $FeAl_3$ have higher hardness and brittle properties than $\alpha$-Fe, $Fe_3Al$, and FeAl, and thus, a large amount of powder particles are generated during hot press forming, which may be the main cause of the mold die pollution problem during the hot press forming.

Accordingly, in order to improve the mold die pollution problem, the inventors of the present disclosure have deeply studied a method to increase the content of $\alpha$-Fe, $Fe_3Al$, and FeAl having a high Fe content, among the Fe-Al alloys, in the alloying of the plating layer during the hot press forming of an aluminum-plated steel sheet, and conversely, to reduce the ratio of $Fe_2Al_5$ and $FeAl_3$, and have achieved the present disclosure.

First, an embodiment of the aluminum-plated steel sheet of the present disclosure will be described in detail.

The aluminum-plated steel sheet includes a base steel sheet and an Al plating layer formed on the base steel sheet, and the Al plating layer includes an alloy layer formed on an interface with the base steel sheet. The alloy layer refers to a layer formed by an alloy formed by a reaction between the base steel sheet and the Al plating layer. As an example of the formation of the alloy layer, when the base steel sheet is immersed in an Al plating bath, the base steel sheet and the Al plating bath components may first react and be formed.

In the Glow Discharge Optical Emission Spectrometry (GDOES) analysis results from a surface of the Al plating layer in a thickness direction inside the base steel sheet, a Fe concentration gradient in a section during which a Fe content in the Al plating layer is 40 to 90 wt.% includes 13 to 26 wt.%/$\mu$m. Preferably, the Fe concentration gradient in the section during which the Fe content in the Al plating layer is 40.0 to 90.0 wt.% may include 13.0 to 26.0 wt.%/$\mu$m.

As described above, in order to improve the mold die pollution, during heating for the hot press forming, it is necessary to suppress the formation of $Fe_2Al_5$ and $FeAl_3$ having relatively brittle characteristics due to a low Fe content during an alloying process of the Al plating layer, and to increase the content of $\alpha$-Fe, $Fe_3Al$ and FeAl having a relatively high Fe content. To this end, during the hot press forming, it may be necessary to sufficiently diffuse Fe into the Al plating layer in a short period of time to perform alloying.

According to the first law of diffusion (Fick's first law) of (Formula 1) below, diffusion occurs from a region of high concentration to a region of low concentration, and as the concentration gradient increases, the amount of diffusion may increase.

$$(Formula\ 1)$$

$$J_B = -D_B \frac{dC_B}{dx}$$

$J_B$: Flux, which represents the number of atoms passing through a unit area per unit time
$D_B$: Diffusion coefficient of B atoms
C: Concentration
x: Direction
$dC_B/dx$: Concentration change rate in the x-direction

That is, according to the (Formula 1), a method of increasing an amount of Fe diffusion or flux of the base steel sheet in a short period of time during hot press forming may be performed as the Fe concentration gradient formed between the Al plating layer and the base steel sheet in the Al plating steel sheet increases. The steeper the Fe concentration gradient, the more the amount of Fe diffusion may be increased in a short period of time during hot press forming, and the more alloy phases having a high Fe content in the diffusion layer and the alloy layer of the hot press-formed member are formed, and the proportion of the brittle alloy phase decreases.

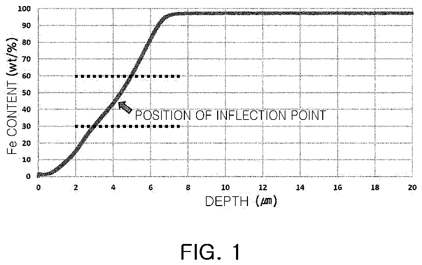

In the GDOES analysis results from the Al plating layer surface in the thickness direction inside the base steel sheet, it is effective that the Fe concentration gradient in a section during which the Fe content in the Al plating layer is 40 to 90 wt.% is 13 to 26 wt.%/$\mu$m, preferably 13.5 to 23 wt.%/$\mu$m. Hereinafter, this will be described in detail with reference to FIG. 1. FIG. 1 is a graph illustrating a Fe concentration depth profile of Glow Discharge Optical Emission Spectroscopy (GDOES) from a surface for a plated steel sheet of Invention Example 2 manufactured in the following embodiment.

As illustrated in FIG. 1, when the Fe concentration gradient is analyzed as a GDOES depth profile from the Al plating layer surface in the thickness direction inside the base steel sheet, the gradient of the Fe content observed from the Al plating layer surface is gentle and then increases rapidly and then changes to a gentle pattern again. Through this, an alloy layer formed on the interface with the base steel sheet is confirmed, and a thickness of the alloy layer may be confirmed to be about 2 to 6 $\mu$m. That is, an inflection point (see arrow in FIG. 1) at which a Fe gradient of the alloy layer and a Fe gradient in the plating layer change is confirmed on the GDOES profile. The inflection point may be considered as an indicator that may distinguish an AlSi plating layer and an alloy layer (AlSiFe) within the Al plating layer, and the alloy layer may be identified by the inflection point. A position of the inflection point at which the Fe inclination changes in the Fe content (wt.%) profile graph on the GDOES profile mainly exists between 30 wt.% and 60 wt.%. Accordingly, in order to define the Fe concentration gradient in more detail, a Fe concentration gradient value is limited to between 40 wt.% and 90 wt.%, and the concentration gradient value in the Fe section between 40 and 90 wt.% is measured.

When the Fe concentration gradient in the section during which the Fe content in the Al plating layer is 40 to 90 wt.% is less than 13 wt.%/$\mu$m, this is not an Al plating steel sheet having improved mold die pollution that the present disclosure develops due to the characteristics of a typical Al plating steel sheet, and when the Fe concentration gradient exceeds 26 wt.%/$\mu$m, a thickness of the alloy layer in the Al plating steel sheet is significantly thin, and thus, when the Al plating steel sheet is hot press-formed, Fe of the base iron easily destroys a thin alloy layer, resulting in rapid diffusion, which may cause the formation of an uneven alloy layer, resulting in a decrease in corrosion resistance.

It is effective that the Fe content of the Al plating layer is 8 to 24 wt.%, preferably 8.0 to 24.0 wt.%, and more preferably 8.5 to 23 wt.%.

As an example of a method of measuring the Fe content of the Al plating layer, a circular plating layer having a radius of 25 mm is melted and measured using Inductively Coupled Plasma (ICP). In a specific method, a circular Al plating layer having a radius of 25 mm is first dissolved in a 20% NaOH solution, and the plating layer is secondarily dissolved in a solution containing HCl and an inhibitor in a ratio of 1:3, and then the solution containing the first and second solutions is analyzed by ICP to measure the contents of Al, Si, and Fe, and in this case, effectively, the Fe content should be 8 to 24 wt.%, more preferably 8.5 to 23 wt.%, in the present disclosure.

The Fe content in the Fe profile of GDOES may be obtained by integrating the Fe profile, but the GDOES profile indicates the Fe content in the corresponding position in the thickness direction, and thus, it may be somewhat difficult to observe the contents of the components included in the entire plating layer. In comparison, the ICP analysis is a component analysis of a sample of a melted plating layer, and may obtain the Fe content contained in the entire plating layer including the Al alloy layer, so that the reliability of content measurement data is high.

Meanwhile, if the Fe content of the Al plating layer is less than 8 wt.%, this is not an Al plating steel sheet having improved mold die pollution that the present disclosure seeks to develop due to the characteristics of a typical Al plating steel sheet, and when the Fe content exceeds 24 wt.%, as the difference between the Fe content in the plating layer and the Fe content of the base steel sheet sufficiently increases, the diffusion of Fe may be promoted during the hot press forming, but when the Fe content in the plating layer exceeds 24 wt.%, there is no great difference between the Fe content of the base steel sheet and the Fe content of the plating layer, which may cause a problem in that speed of the diffusion of Fe of the base steel into the Al plating steel sheet is slowed during the hot press forming.

The Al plating layer is sufficient as long as this is an Al-based plating widely used in plated steel sheets for hot press forming performed by a skilled person in the technical field of hot press forming plated steel sheets to which the present disclosure belongs, and the content or type of components thereof is not particularly limited. In addition to pure Al plating, the Al plating layer may include all of plating performed by including some Si in Al, plating performed by including some Zn in Al, plating performed by including at least one of some Si, Mg, Zn or Fe in Al.

A thickness of the Al plating layer is effectively 3 $\mu$m to 30 $\mu$m, preferably 3.0 to 30.0 $\mu$m, more preferably 4 $\mu$m to 26 $\mu$m.

When the thickness of the Al plating layer is less than 3 $\mu$m, the plating layer is significantly thin, and thus, a large amount of non-plated materials may occur on a surface of the Al-plated steel sheet, which may affect the corrosion resistance of the component after the hot press forming, and when the thickness thereof exceeds 30 $\mu$m, even if the Fe of the base iron rapidly diffuses during the hot press forming, the thickness of the plating layer is thick, and thus, it may be difficult to improve mold die pollution due to a high fraction of brittle phases.

Meanwhile, the base steel sheet is not particularly limited as long as this is a steel sheet that may be used for the hot press forming. In addition to the classification according to the manufacturing process, such as hot-rolled steel sheets and cold-rolled steel sheets, there are no special restrictions on the composition of steel types and alloys, such as dual phase (DP), composite phase steel, TRIP steel, and TWIP steel.

As a specific example, a 22MnB5 steel type is representative, and may be a steel type including a carbon (C): 0.1 to 0.3%, manganese (Mn): 1.0 to 2.0%, silicon (Si): 0.02 to 0.30%, boron (B): 5 to 45 ppm in wt.% (weight%), and including a balance of unavoidable impurity elements and iron (Fe).

In addition, the steel sheet may be a steel type having a chemical composition including, by wt.%, carbon (C): 0.02 to 0.6%, silicon (Si): 0.001 to 2%, aluminum (Al) : 0.001 to 1%, manganese (Mn): 0.1 to 4%, phosphorus (P) : 0.05% or less, sulfur (S) : 0.02% or less, nitrogen (N) : 0.02% or less, titanium (Ti): 0 to 0.1%, boron (B): 0.0001 to 0.01%, copper (Cu): 0 to 1.00%, molybdenum (Mo) : 0 to 1.00%, chromium (Cr) : 0 to 1.00%, nickel (Ni): 0 to 1.00%, vanadium (V): 0 to 1.00%, calcium (Ca) : 0 to 0.01%, niobium (Nb): 0 to 0.1%, tin (Sn) : 0 to 1%, tungsten (W): 0 to 1%, antimony (Sb) : 0 to 1%, magnesium (Mg) : 0 to 0.1%, cobalt (Co) : 0 to 1%, arsenic (As) : 0 to 1%, zirconium (Zr): 0 to 1%, bismuth (Bi) : 0 to 1%, rare earth metal (REM): 0 to 0.3%, and a balance of Fe and other impurity elements.

Next, an embodiment of a manufacturing method of an aluminum-plated steel sheet according to an example of the present disclosure will be described in detail. The manufacturing method of the aluminum-plated steel sheet includes: immersing a base steel sheet in a plating bath and attaching a plating solution to a surface of the base steel sheet; controlling a plating attachment amount on the surface of the base steel sheet; and transferring the base steel sheet to which the plating solution is attached, to a cooling means. Hereinafter, each operation will be described in detail.

First, the base steel sheet is immersed in the plating bath to attach the plating solution to the surface of the base steel sheet.

As described above, the base steel sheet is not particularly limited in a target, steel type, or the like, thereof, as long as this may be used as a hot press-formed member. Before immersing the base steel sheet in the plating bath, the base steel sheet may be heated to a certain temperature (inlet temperature). In this case, the inlet temperature is effectively 600 to 680°C. Preferably, the inlet temperature is more effective to be 600.0 to 680.0°C. By heating the base steel sheet to the inlet temperature, molten aluminum rapidly solidifies on the surface of the steel sheet, thereby preventing problems such as a deviation in the plating attachment amount or non-plating due to a decrease in fluidity. However, excessive heating may actually promote the melting of the steel sheet, which may accelerate the generation of dross.

The plating bath may be an Al-based plating bath, and the Al-based plating bath is for forming an Al plating layer, and when the plating bath is a plating that may be applied to a hot-forming plated steel sheet, this may be applied to the present disclosure without limitation.

As an example, the plating bath composition may include silicon (Si): 6 to 12 wt.%, iron (Fe): 1 to 4 wt.%, and a balance of aluminum (Al) and other unavoidable impurity elements. As another example, the plating bath composition may include silicon (Si) 5 to 13 wt.%, zinc (Zn) 15 to 35 wt.%, magnesium (Mg) 0.01 to 5 wt.%, iron (Fe) 0 to 5 wt.%, manganese (Mn) 0.01 to 5 wt.%, chromium (Cr) 0.01 to 7 wt.%, and a balance of aluminum (Al) and other unavoidable impurity elements.

It is effective that a temperature of the plating bath is 600 to 680°C. Preferably, the temperature of 600.0 to 680.0°C is more effective. When the temperature of the plating bath is significantly low, the fluidity of the plating solution in the plating bath may decrease, whereas when the temperature is significantly high, the occurrence of dross in the plating bath may increase.

Next, the plating attachment amount of the base steel plate is adjusted. The means or method of controlling the plating attachment amount is not particularly limited, and may be performed as a method commonly performed in the technical field to which the present disclosure belongs. As an example, an air knife (A/K) is used.

Effectively, the plating attachment amount may be 8 to 80 g/m² on one side, and a plating layer thickness may be 3 to 30 $\mu$m. Preferably, more effectively, the plating attachment amount may be 8.0 to 80.0 g/m² on one side, and the plating layer thickness may be 3.0 to 30.0 $\mu$m. The plating attachment amount of Al plating may be converted into a plating attachment amount when the plating layer thickness $\times$ 2.7 is usually calculated, and when the plating layer thickness of 3 to 30$\mu$m is converted into an plating attachment amount, this is approximately 8 to 80 g/m². A more preferable thickness is 4 to 26$\mu$m, and a more preferable plating attachment amount is 10 to 70 g/m².

The base steel sheet having the controlled plating attachment amount is transported to a cooling means and cooled. When the base steel sheet to which the plating solution is attached enters the cooling means, rapid cooling begins, and the reaction of the alloy layer in the Al plating layer may be terminated. An example of the cooling means is a cooling tower.

The manufacturing method is effective when a K value defined by the following formula 2 is 200 to 400.

The formula 2 may be calculated as follows.

$$\text{(Formula 2)} \quad K = 10^6 * (a*d) / (b*c*e)$$

Where a: Si content in the plating bath (wt.%), b: line speed (mpm), c: A/K gap (mm), d: A/K pressure (kPa), A/K height (mm) are provided, line speed refers to the speed of transfer through the plating bath, the gap of the air knife (A/K) for controlling the plating attachment amount refers to a gap between the steel sheet and the air knife, and the A/K height refers to a distance from the plating bath to the A/K.

The (Formula 2) considers the characteristics of each variable that determines the characteristics of the plating layer in order to manufacture a plated steel sheet improving the die pollution resistance of the mold, and has technical significance in considering the factors affecting the manufacturing of the plating steel sheet and their correlation for the purpose of improving the die pollution resistance.

In order to manufacture a steel plate to improve the die pollution resistance of the mold, as a result of considering several process factors such as a plating bath Si content, a plating bath temperature, an inlet temperature, Line Speed, an A/K gap, A/K pressure, A/K height, and Cooling Tower cooling speed, it is necessary to optimize the plating bath Si content, the Line Speed, the A/K gap, the A/K pressure, and the A/K height, which are derived from the (Formula 2), and when a K value of the (Formula 2) is 200 to 400, the die pollution resistance of the mold may be improved. Preferably, this is more effective when the K value is 200.0 to 400.0.

Specifically, when the K value is less than 200, it may be difficult to improve the die pollution because the A/K pressure is not high enough to improve the mold die pollution resistance, or the Line Speed, the A/K gap, and the A/K height are low, and when the K value exceeds 400, it may be difficult to improve the die pollution because the A/K pressure is significantly high, or the Line Speed, the A/K gap, and A/K height are higher than the appropriate values.

Before immersing the base steel plate in the plating bath, the base steel plate may be provided in various manner. For example, the base steel plate may be manufactured by including processes such as hot rolling, coiling, cold rolling, and annealing after heating a steel slab. The specific process conditions such as heating, hot rolling, coiling, cold rolling, and annealing of the steel slab required here may vary depending on the characteristics required for the base steel plate, and thus are not particularly limited.

Next, an embodiment of a hot press-formed member of the present disclosure will be described in detail.

The hot press-formed member of the present disclosure includes a base iron, an Fe-Al alloy plating layer formed on the base iron, and includes a diffusion layer formed between the Fe-Al alloy plating layer and the base iron.

The Fe-Al alloy plating layer and the diffusion layer refer to alloys formed by mutual diffusion and reaction of the plating layer components and the base iron components during the process of heating the aluminum-plated steel sheet. Regarding the diffusion layer and the Fe-Al alloy plating layer, a portion in which $\alpha$-Fe, $Fe_3Al$, and FeAl having high Fe contents are formed in large quantities is referred to as a diffusion layer, and a portion in which $Fe_2Al_5$ and $FeAl_3$ having relatively high Al contents are formed in large quantities is referred to as a Fe-Al alloy plating layer. The diffusion layer and the Fe-Al alloy plating layer may be optically confirmed through Nital etching of a cross-section of the hot press-formed member, and the diffusion layer is a first layer existing directly on the base iron transformed into martensite, and a second layer thereafter may be regarded as the Fe-Al alloy plating layer.

The hot press-formed member is effective when a hard layer ratio defined by the following (Formula 3) is 50 to 75%. Preferably, the hot press-formed member is more effective when the hard layer ratio is 50.0 to 75.0%.

(Formula 3) Hard layer ratio =

$$\frac{Fe\text{-}Al \text{ plating layer average thickness}}{(Fe\text{-}Al \text{ plating layer average thickness} + \text{Diffusion layer average thickness})} \times 100$$

When the hard layer ratio exceeds 75%, since the heating time during the hot press forming should be increased further, which may cause a decrease in the productivity of a component molded member, and thus, it is effective that the hard layer ratio is 75% or less, which may be the lowest, within a range that does not decrease the productivity in the normal heating time. On the other hand, if the hard layer ratio is less than 50%, this is a hard layer ratio that may usually be exhibited in hot press-formed members of Al plated steel sheets, and is thus difficult to regard as a hot press-formed member of an Al-plated steel sheet having improved mold die pollution resistance.

The base iron of the hot press-formed member is not significantly different from the base steel of the hot press-forming plated steel sheet described above, in terms of alloy composition, but there may be a difference in microstructure, so that the base iron and the base steel may be preferably distinguished. Accordingly, in the present disclosure, the base steel is used in the hot press-forming plated steel sheet, which is distinguished from the base iron used in the hot press-formed member. Meanwhile, the base steel of the hot press-forming plated steel sheet may include ferrite and pearlite structures, but in the base steel of the hot press-formed member formed through hot press forming, martensite may be formed as a main phase and some bainite may be formed.

Next, an embodiment of a manufacturing method of a hot press-formed member of the present disclosure will be described in detail. To this end, a blank is provided. As an example of the blank, the aluminum-plated steel sheet described above may be used for manufacturing.

The provided blank may be preferably heated at a temperature higher than the austenite single-phase temperature, more specifically, in the temperature range of Ac3 to 975°C. When the heating temperature is lower than a temperature of Ac3, it may be difficult to secure strength and crash resistance due to the presence of untransformed ferrite in a two-phase section. On the other hand, when the heating temperature exceeds 975°C, excessive oxides may be generated on a surface of the member, making it difficult to secure spot weldability, and the manufacturing costs for maintaining a high temperature increases. The heated blank may be preferable maintained in the temperature range for 1 to 1000 seconds. When the maintenance time is less than 1 second, it may be difficult to achieve a uniform temperature distribution throughout the blank, which may cause material deviation for each position, and when the maintenance time exceeds 1000 seconds, it may be difficult to secure spot weldability due to the excessive oxides generated on the surface, and an increase in the manufacturing costs of the member may be also caused.

The heated blank is transferred to a press and a process of forming and cooling the blank is performed. In this case, a cooling rate is preferably 20°C/s or higher. The cooling rate is more preferable 20.0°C/s or higher. When the cooling speed is less than 20°C/s, a ferrite phase is introduced during cooling and formed at the grain boundary, which may deteriorate physical properties such as strength and crash resistance. The process of transferring, forming, and cooling the blank is not particularly limited, and what is commonly used for hot press forming may be unchangeably applied thereto.

**Mode for Invention**

Hereinafter, an embodiment of the present disclosure will be described. It should be understood that the following embodiment may be modified in various ways without departing from the scope of the present disclosure by those skilled in the art to which the present disclosure pertains. The following embodiment is intended for understanding the present disclosure, and the scope of the present disclosure should not be limited to the following embodiment, but should be determined by the claims described below as well as their equivalents.

(Embodiment)

In an embodiment of the present disclosure, a conventional 22MnB5 base steel sheet was prepared, and an aluminum-plated steel sheet was manufactured by immersing the base steel in a plating bath containing about 9 to 10 wt.% of Si and a balance of Al and other inevitable impurity elements. In this case, the temperature of the plating bath was 640 to 670°C, and an inlet temperature of the base steel plate was 650 to 680°C.

In order to manufacture the plating steel plate, in this case, the Si content in the plating bath, the steel plate transfer speed (line speed) were controlled, and a single-sided plating attachment amount was adjusted to $10 \sim 80 \text{g/m}^2$. The plating attachment amount was controlled by an air knife (A/K), and cooled by transferring the steel plate to a cooling tower as a cooling means. The process conditions in this case are shown in Table 1.

Table 1:

| Division | Si content in plating bath (wt. %) | Line Speed (mpm) | Air Knife A/K | | | cooling tower cooling speed (°C/s) | Formula 2 |
|---|---|---|---|---|---|---|---|
| | | | A/K gap (mm) | A/K pressure (kPa) | A/K height (mm) | | |
| Comparative Example 1 | 7.5 | 120 | 15 | 11 | 900 | 15 | 51 |
| Comparative Example 2 | 7.5 | 100 | 14 | 11 | 1000 | 13 | 59 |
| Comparative Example 3 | 7.5 | 75 | 9 | 11 | 900 | 14 | 136 |
| Comparative Example 4 | 7.5 | 75 | 11 | 13 | 800 | 14 | 148 |
| Comparative Example 5 | 9.5 | 90 | 10 | 10 | 1000 | 15 | 106 |
| Comparative Example 6 | 9.5 | 90 | 9 | 11 | 900 | 16 | 143 |
| Comparative Example 7 | 9.5 | 80 | 10 | 11 | 900 | 15 | 145 |
| Comparative Example 8 | 9.5 | 75 | 12.5 | 10 | 1000 | 15 | 101 |
| Comparative Example 9 | 9.5 | 120 | 15 | 12 | 1000 | 14 | 63 |
| Comparative Example 10 | 9.5 | 120 | 15 | 11 | 900 | 15 | 65 |
| Comparative Example 11 | 9.5 | 100 | 14 | 11 | 1000 | 13 | 75 |
| Inventive Example 1 | 9.5 | 75 | 7.5 | 11 | 900 | 14 | 206 |
| Inventive Example 2 | 9.5 | 75 | 10 | 13 | 800 | 14 | 206 |
| Inventive Example 3 | 9.5 | 65 | 8 | 13 | 800 | 15 | 297 |
| Inventive Example 4 | 9.5 | 60 | 9 | 13 | 800 | 15 | 286 |
| Inventive Example 5 | 9.5 | 60 | 7.5 | 12 | 700 | 14 | 362 |
| Comparative Example 12 | 9.5 | 55 | 7.5 | 12 | 600 | 15 | 461 |
| Comparative Example 13 | 11.5 | 60 | 5.5 | 13 | 900 | 16 | 503 |
| Comparative Example 14 | 11.5 | 70 | 7.5 | 15 | 800 | 14 | 411 |
| Comparative Example 15 | 11.5 | 65 | 5 | 12 | 1000 | 13 | 425 |
| Comparative Example 16 | 11.5 | 50 | 7.5 | 11 | 800 | 15 | 422 |
| Comparative Example 17 | 11.5 | 60 | 5 | 12 | 1000 | 14 | 460 |

The following formula 2 can be calculated as follows.

$$(Formula\ 2)\ K = 10^6*(a*d)/(b*c*e)$$

Where a: Si content in the plating bath (wt.%), b: line speed (mpm), c: A/K gap (mm), d: A/K pressure (kPa), A/K height (mm)

For the aluminum-plated steel sheet manufactured as described above, a Fe concentration gradient in the Al plating layer and an alloy composition of the Al plating layer were measured and are shown together in Table 2.

For the Fe concentration gradient, from the results of GDOES analysis in a depth direction from the surface of the Al plating layer of the manufactured aluminum-plated steel sheet, the Fe concentration gradient was obtained in a section during which the Fe content was 40 to 90 wt.%. The alloy composition was first dissolved in a 20% NaOH solution of the Al plating layer, and then the plating layer was completely dissolved (secondarily) in a solution containing HCl and an inhibitor in a 1:3 ratio, and then, the solution obtained by adding both the first and second solutions was analyzed using ICP to measure the contents of Al, Si, and Fe.

Table 2:

| Division | Al plating layer composition (wt.%) | | | Fe concentration gradient (wt.%/μm) |
|---|---|---|---|---|
| | Al | Si | Fe | |
| Comparative Example 1 | 83.70 | 7.10 | 5.2 | 7.53 |
| Comparative Example 2 | 84.60 | 7.60 | 6.8 | 8.01 |
| Comparative Example 3 | 86.30 | 7.90 | 5.8 | 8.32 |
| Comparative Example 4 | 79.50 | 7.60 | 6.0 | 8.76 |
| Comparative Example 5 | 84.40 | 8.80 | 5.1 | 9.65 |
| Comparative Example 6 | 85.00 | 9.10 | 5.9 | 10.23 |
| Comparative Example 7 | 84.40 | 8.70 | 6.9 | 11.11 |
| Comparative Example 8 | 84.10 | 8.80 | 7.1 | 11.43 |
| Comparative Example 9 | 82.90 | 9.30 | 7.8 | 11.78 |
| Comparative Example 10 | 83.70 | 9.10 | 7.2 | 10.91 |
| Comparative Example 11 | 84.60 | 8.60 | 6.8 | 10.43 |
| Inventive Example 1 | 82.60 | 8.90 | 8.5 | 13.04 |
| Inventive Example 2 | 79.50 | 8.60 | 11.9 | 14.57 |
| Inventive Example 3 | 78.40 | 8.80 | 12.8 | 15.83 |
| Inventive Example 4 | 76.30 | 9.40 | 14.3 | 16.98 |
| Inventive Example 5 | 74.30 | 9.90 | 15.8 | 18.08 |
| Comparative Example 12 | 75.50 | 10.20 | 14.3 | 9.29 |
| Comparative Example 13 | 85.00 | 10.50 | 5.9 | 10.23 |
| Comparative Example 14 | 84.40 | 11.10 | 6.9 | 11.11 |
| Comparative Example 15 | 78.40 | 10.80 | 12.8 | 9.93 |
| Comparative Example 16 | 76.30 | 11.70 | 14.3 | 9.98 |
| Comparative Example 17 | 79.50 | 11.30 | 6.0 | 8.76 |

FIG. 1 is a graph illustrating the GDOES Fe concentration profile of Invention Example 2 in Table 2 above.

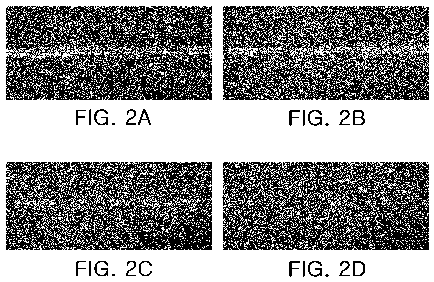

For the aluminum-plated steel sheets manufactured as in Tables 1 and 2 above, mold die pollution resistance characteristics were evaluated, and results thereof are shown in FIGS. 2 to 3 and Table 3 below. Specifically, for Comparative Examples 1 and 4 and Invention Examples 1 and 3, among the examples, images obtained by evaluating the mold die pollution resistance characteristics are shown in FIG. 2 and Table 3. FIG. 2A and FIG. 2B are images of Comparative Example 1 and Comparative Example 4, and FIG. 2C and FIG. 2D are images of Invention Example 1 and Invention Example 3.

In order to confirm the mold die pollution resistance characteristics, each specimen was made into a member heat-treated at 900°C for 5 minutes, and powdering properties were evaluated using the V-bending experimental method (condition: 20°, 2R) for the heat-treated member. The cause of the die pollution is that a large amount of powder particles fall from the plating layer during the mold press and are accumulated, and are not removed in time. Accordingly, the mold die pollution resistance may be confirmed by evaluating the powdering properties.

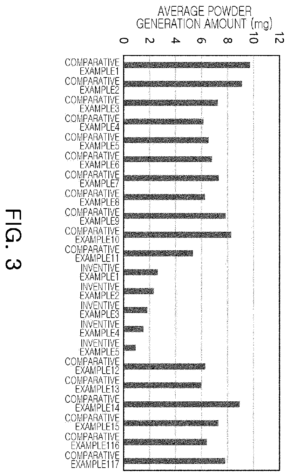

In order to perform the powdering property evaluation, the specimen heat-treated was sheared to 60×30 mm and then subjected to a V-banding experiment. In this case, the experimental conditions were 20°, 2R, and weights before and after the experiment were measured and the results are shown in Table 3. In addition, FIG. 2 illustrates images of some specimens in Table 3 below after the V-bending test, and FIG. 3 illustrates a powder generation amount (average weight loss) in each specimen in Table 2 as a graph.

Table 3:

| Division | Before banding (g) | After banding (g) | Weight loss (mg) | Average (mg) |
|---|---|---|---|---|
| Comparative Example 1 | 16.8168 | 16.8053 | 11.5 | 9.73 |
| | 16.7302 | 16.723 | 7.2 | |
| | 16.8058 | 16.7953 | 10.5 | |
| Comparative Example 4 | 16.2243 | 16.2193 | 5.0 | 6.13 |
| | 16.3358 | 16.3318 | 4.0 | |
| | 16.5039 | 16.4945 | 9.4 | |
| Inventive Example 1 | 16.4125 | 16.4102 | 2.3 | 2.63 |
| | 16.2917 | 16.2883 | 3.4 | |
| | 16.3992 | 16.3970 | 2.2 | |
| Inventive Example 3 | 16.2142 | 16.2121 | 2.1 | 1.83 |
| | 16.1682 | 16.1662 | 2.0 | |
| | 16.0855 | 16.0841 | 1.4 | |

As may be seen from the results in Table 3 and FIGS 2 to 3 above, it may be seen that the aluminum-plated steel sheet corresponding to the inventive example satisfying the range presented in the present disclosure has significantly reduced plating powder generation during the hot press forming process.

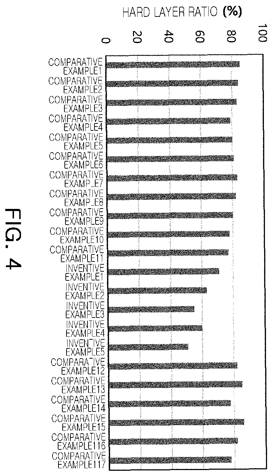

Meanwhile, for each specimen of Table 2 subjected to the heat treatment, it was confirmed that the alloyed plating layer formed a diffusion layer and an Fe-Al alloy plating layer, and a hard layer ratio thereof was measured and results of are shown in FIG 4. In order to measure the hard layer ratio, each specimen was observed with cross-sectional optical observation to measure thicknesses of the Fe-Al alloy plating layer and the diffusion layer. The hard layer ratio was calculated by the following (Formula 3).

$$(\text{Equation 3}) \; \text{Hard layer ratio} =$$

$$\frac{Fe\text{-}Al \text{ plating layer average thickness}}{(Fe\text{-}Al \text{ plating layer average thickness} + \text{Diffusion layer average thickness})} \times 100$$

As may be seen from the results in FIG 4, it may be seen that the hard layer ratio of the comparative example is higher than that of the inventive example.

Accordingly, in the inventive example according to the present disclosure, since a large amount of Fe existed in the plating layer in the plated steel sheet and the Fe gradient in the alloy layer was large, a large amount of Fe was able to diffuse, and thus, since a ratio of the diffusion layer after heat treatment was high, the hard layer ratio was low, so that the amount of powdering was reduced.

## Claims

1. An aluminum-plated steel sheet, comprising:

   a base steel sheet and an Al plating layer formed on the base steel sheet,
   wherein in GDOES analysis results from a surface of the Al plating layer in a thickness direction, a Fe concentration gradient in a section during which a Fe content in the Al plating layer is 40 to 90 wt.% is 13 to 26 wt.%/$\mu$m,
   wherein the Fe content of the Al plating layer is 8 to 24 wt.%

2. The aluminum-plated steel sheet of claim 1, wherein the Al plating layer comprises an alloy layer formed on an interface with the base steel sheet, and a thickness of the alloy layer is 2 to 6 $\mu$m.

3. The aluminum-plated steel sheet of claim 1 or 2, wherein the Fe concentration gradient is 13.5 to 23 wt.%.

4. The aluminum-plated steel sheet of one of claims 1 to 3, wherein the Fe content of the Al plating layer is 8.5 to 23 wt.%.

5. The aluminum-plated steel sheet of one of claims 1 to 4, wherein a thickness of the Al plating layer is 3 to 30 $\mu$m.

6. The aluminum-plated steel sheet of one of claims 1 to 5, wherein the base steel sheet comprises, by wt.%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, REM: 0 to 0.3%, and a balance of Fe and other impurities.

7. A manufacturing method of an aluminum-plated steel sheet, comprising:

immersing a base steel sheet in an aluminum (Al) plating bath comprising silicon (Si) and attaching a plating solution to a surface of the base steel sheet;
controlling a plating attachment amount on the surface of the base steel sheet using an air knife (A/K); and
transferring the base steel sheet to which the plating solution is attached, to a cooling means, and cooling the base steel sheet, wherein a condition that a K value of the following (Formula 2) is 200 to 400 is satisfied,

$$(Formula\ 2)\ K = 10^6*(a*d)/(b*c*e)$$

where a: plating bath Si content (wt.%), b: line speed (mpm), c: A/K gap (mm), d: A/K pressure (kPa), A/K height (mm).

8. The manufacturing method of an aluminum-plated steel sheet of claim 7,
wherein a plating bath inlet temperature of the base steel sheet is 600 to 680°C.

9. The manufacturing method of an aluminum-plated steel sheet of claim 7 or 8,
wherein the plating attachment amount is 8 to 80 g/m$^2$.

10. The manufacturing method of an aluminum-plated steel sheet of one of claims 7 to 9,
wherein the plating bath comprises silicon (Si): 6-12 wt.%, iron (Fe): 1-4 wt.%, and a balance of aluminum (Al) and other inevitable impurity elements.

11. The manufacturing method of an aluminum-plated steel sheet of one of claims 7 to 9,
wherein the plating bath comprises 5 to 13 wt.% of silicon (Si), 15 to 35 wt.% of zinc (Zn), 0.01 to 5 wt.% of magnesium (Mg), 0 to 5 wt.% of iron (Fe), 0.01 to 5 wt.% of manganese (Mn), 0.01 to 7 wt.% of chromium (Cr), and a balance of aluminum (Al) and other inevitable impurity elements.

12. The manufacturing method of an aluminum-plated steel sheet of one of claims 7 to 11,
wherein a temperature of the plating bath is 600 to 680°C.

13. A hot press-formed member, comprising:

a base iron, an Fe-Al alloy plating layer formed on the base iron, and a diffusion layer formed between the base iron and the Fe-Al alloy plating layer,
wherein a hard layer ratio defined by the following (Formula 3) is 50 to 75%,

$$(Formula\ 3)\ Hard\ layer\ ratio =$$

$$\frac{Fe\text{-}Al\ \text{plating layer average thickness}}{(Fe\text{-}Al\ \text{plating layer average thickness} + \text{Diffusion layer average thickness})} \times 100$$

14. A manufacturing method of a hot press-formed member, comprising:

manufacturing a blank using the aluminum-plated steel sheet of one of claims 1 to 6;
heating the blank; and
forming and cooling the heated blank in a mold.

FIG. 1

FIG. 2A

FIG. 2B

FIG. 2C

FIG. 2D

FIG. 3

FIG. 4

## INTERNATIONAL SEARCH REPORT

International application No.

**PCT/KR2023/015225**

### A. CLASSIFICATION OF SUBJECT MATTER

**C23C 2/12**(2006.01)i; **C23C 2/20**(2006.01)i; **C23C 2/28**(2006.01)i; **C22C 21/02**(2006.01)i; **C22C 38/04**(2006.01)i; **C22C 38/58**(2006.01)i; **C22C 38/54**(2006.01)i; **C22C 38/42**(2006.01)i; **C22C 38/44**(2006.01)i; **C22C 38/46**(2006.01)i

According to International Patent Classification (IPC) or to both national classification and IPC

### B. FIELDS SEARCHED

Minimum documentation searched (classification system followed by classification symbols)

C23C 2/12(2006.01); B21D 22/00(2006.01); C22C 21/02(2006.01); C22C 38/00(2006.01); C22C 38/02(2006.01); C22C 38/04(2006.01); C22C 38/58(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도금강판(plated steel sheet), 알루미늄(aluminum), 철(iron), 실리콘(silicon), 열간 성형(hot press forming), 냉각(cooling), 에어 나이프(air knife)

### C. DOCUMENTS CONSIDERED TO BE RELEVANT

| Category* | Citation of document, with indication, where appropriate, of the relevant passages | Relevant to claim No. |
|---|---|---|
| X | CN 111394679 A (YUCAITANG (SUZHOU) MATERIAL TECHNOLOGY CO., LTD.) 10 July 2020 (2020-07-10)<br>See paragraphs [0030], [0041] and [0059]-[0060] and claims 1 and 10. | 1-14 |
| A | KR 10-2022-0089439 A (POSCO) 28 June 2022 (2022-06-28)<br>See paragraph [0114] and claims 1, 3 and 8. | 1-14 |
| A | US 2022-0025498 A1 (NIPPON STEEL CORPORATION) 27 January 2022 (2022-01-27)<br>See paragraph [0128] and claim 8. | 1-14 |
| A | CN 114807755 A (MAANSHAN IRON & STEEL CO., LTD.) 29 July 2022 (2022-07-29)<br>See claims 1-4. | 1-14 |
| A | KR 10-2015-0075435 A (POSCO) 06 July 2015 (2015-07-06)<br>See paragraphs [0089]-[0092] and claim 1. | 1-14 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 January 2024** | **17 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015225**

| Patent document cited in search report | | | Publication date (day/month/year) | Patent family member(s) | | | Publication date (day/month/year) |
|---|---|---|---|---|---|---|---|
| CN | 111394679 | A | 10 July 2020 | BR | 112022025079 | A2 | 27 December 2022 |
| | | | | BR | 212022024841 | U2 | 03 January 2023 |
| | | | | CA | 3185460 | A1 | 16 December 2021 |
| | | | | CN | 111394679 | B | 28 August 2020 |
| | | | | CN | 116157544 | A | 23 May 2023 |
| | | | | EP | 4148160 | A1 | 15 March 2023 |
| | | | | EP | 4148160 | A4 | 15 March 2023 |
| | | | | JP | 2023-538178 | A | 07 September 2023 |
| | | | | KR | 10-2023-0022425 | A | 15 February 2023 |
| | | | | US | 2023-0235439 | A1 | 27 July 2023 |
| | | | | WO | 2021-248635 | A1 | 16 December 2021 |
| KR | 10-2022-0089439 | A | 28 June 2022 | KR | 10-2501440 | B1 | 20 February 2023 |
| US | 2022-0025498 | A1 | 27 January 2022 | CN | 113166908 | A | 23 July 2021 |
| | | | | CN | 113166908 | B | 11 July 2023 |
| | | | | EP | 3889310 | A1 | 06 October 2021 |
| | | | | EP | 3889310 | A4 | 10 August 2022 |
| | | | | JP | 6813133 | B2 | 13 January 2021 |
| | | | | JP | WO2020-111230 | A1 | 04 June 2020 |
| | | | | KR | 10-2021-0080521 | A | 30 June 2021 |
| | | | | KR | 10-2518795 | B1 | 10 April 2023 |
| | | | | MX | 2021006058 | A | 06 July 2021 |
| | | | | WO | 2020-111230 | A1 | 04 June 2020 |
| CN | 114807755 | A | 29 July 2022 | None | | | |
| KR | 10-2015-0075435 | A | 06 July 2015 | KR | 10-1585736 | B1 | 15 January 2016 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6296805 B